# EUROPÄISCHE PATENTSCHRIFT

(11) **EP 2 748 440 B1**
(45) Veröffentlichungstag und Bekanntmachung des Hinweises auf die Patenterteilung: **22.03.2017**
(21) Anmeldenummer: 12748167.9
(22) Anmeldetag: 08.08.2012
(51) Int. Cl.: F01N 3/10, F01N 3/035, F01N 13/00, F01N 3/20, F02M 26/15, F02M 26/30

(54) **ABGASBEHANDLUNGSEINRICHTUNG, VERFAHREN ZUR AUFBEREITUNG VON ABGAS UND KRAFTFAHRZEUG**
EXHAUST GAS TREATMENT DEVICE, METHOD FOR PROCESSING EXHAUST GAS, AND MOTOR VEHICLE
DISPOSITIF DE TRAITEMENT DES GAZ D'ÉCHAPPEMENT, PROCÉDÉ DE TRAITEMENT DES GAZ D'ÉCHAPPEMENT ET VÉHICULE AUTOMOBILE

(30) Priorität: 25.08.2011 DE 102011111590
(43) Veröffentlichungstag der Anmeldung: 02.07.2014
(60) Teilanmeldung: 17155494.2
(73) Patentinhaber: Volkswagen Aktiengesellschaft, 38440 Wolfsburg (DE)
(72) Erfinder: SPRUTE, Jörg, 29399 Wahrenholz (DE)
(86) Internationale Anmeldenummer: PCT/EP2012/003387
(87) Internationale Veröffentlichungsnummer: WO 2013/026533

(56) Entgegenhaltungen:
- EP-A1- 2 105 592
- EP-A1- 2 500 538
- WO-A1-2012/110720
- WO-A1-2012/123660
- DE-A1-102009 027 185
- FR-A1- 2 955 612

## Beschreibung

Die vorliegende Erfindung betrifft eine Abgasbehandlungseinrichtung zur Aufbereitung von Abgas eines Verbrennungsaggregats, insbesondere eines Dieselmotors. Weiterhin betrifft die vorliegende Erfindung ein Verfahren zur Aufbereitung von Abgas eines Verbrennungsaggregats durch selektive katalytische Reaktion, sowie ein Kraftfahrzeug, in dem das erfindungsgemäße Verfahren realisiert wird beziehungsweise welches die erfindungsgemäße Abgasbehandlungseinrichtung aufweist.

Eine gründliche und effiziente Reinigung der Abgase einer Verbrennungskraftmaschine kann durch die Zugabe eines Reduktionsmittels zum Abgas in einer Abgasnachbehandlungseinrichtung erfolgen. Dabei werden insbesondere bei mager betriebenen Verbrennungskraftmaschinen, bei denen für die Verbrennung ein Luftüberschuss gegenüber einem stöchiometrischen Kraftstoff-Luft-Gemisch vorliegt, die Stickoxidverbindungen im Abgas reduziert. Als Reaktionsmittel wird üblicherweise Ammoniak verwendet. Bei ausreichenden Temperaturen des Abgases werden die Stickoxidverbindungen zusammen mit dem Ammoniak zu unschädlichen Bestandteilen wie Wasser und Stickstoff reduziert.

Üblicherweise erfolgt die Zugabe des Reduktionsmittels aufgrund von beengten Bauraumverhältnissen im Motorbereich an einem Kraftfahrzeug in dessen Unterbodenbereich und somit in dem dort verlaufenden Abgasstrang. Oftmals werden dabei zweiteilige Reduktionskatalysatoren oder auch zwei voneinander getrennte Reduktionskatalysatoren im Unterbodenbereich angeordnet. Dies bedingt einen gewissen Fertigungs- und Montageaufwand sowie einen erhöhten Energiebedarf, um die im Unterbodenbereich angeordneten Katalysatoren auf die erforderliche Betriebstemperatur zu bringen. Üblicherweise wird dies durch eine elektrische Heizung an oder in den Reduktionskatalysatoren realisiert, oder durch eine so genannte verschleppte Verbrennung von Treibstoff im Verbrennungsmotor. Das bedeutet, dass der Verbrennungsmotor die chemische Energie des Treibstoffes nicht optimal in Bewegungsenergie des Kraftfahrzeuges umsetzen kann. Zudem sind lediglich zirka 400 °C bis 450 °C durch die verschleppte Verbrennung von Treibstoff in den Reduktionskatalysatoren erreichbar.

Die Zuführung von Wärme zu den Reduktionskatalysatoren dient zum einen zur Erwärmung des Abgases zwecks Realisierung der erforderlichen Reduktion und zum anderen zur Erwärmung des Reduktionsmittels, um den dort enthaltenen Wasseranteil möglichst schnell in eine Gasphase zu versetzen.

Aus der DE 102 50 050 A1 ist bekannt, dass sich die Effizienz des Reduktionskatalysators erhöhen lässt, wenn Verbrennungswärme eines Verbrennungsmotors genutzt wird.

Auch aus der DE 10 2008 051 496 A1 ist der Hinweis entnehmbar, dass eine hohe Temperatur des Abgases günstig für den Betrieb des Reduktionskatalysators ist.

Die DE 103 23 607 A1 lehrt eine Vorrichtung zur Reinigung von Abgasen eines Verbrennungsmotors, die einen Oxidationskatalysator, einen Partikelfilter und einen Reduktionskatalysator aufweist. Der Reduktionskatalysator ist dabei mit dem Partikelfilter zu einer baulichen Einheit zusammengefasst.

Im Dokument FR 2 955 612 A1 wird eine unter der Motohaube angeordnete Vorrichtung zur Reinigung von Abgas eines Verbrennungsaggregats offenbart. In einem einzigen Gehäuse sind ein Oxidationskatalysator, ein Dosiermodul zum Einbringen eines Reduktionsmittels und ein Reduktionskatalysator mit einem Partikelfilter angeordnet, welche der chemischen Umsetzung von Stickoxidverbindungen zu Stickstoff durch selektive katalytische Reduktion dienen.

Ferner betreffen die vorangemeldeten, aber nachveröffentlichten Dokumente WO 2012/110720 A1, WO 2012/123660 A1 und EP 2 500 538 A1 motornah angeordnete Vorrichtungen zur Reinigung von Abgas mittels selektiver katalytischer Reduktion. Im Dokument WO 2012/110720 A1 wird ein U-förmiger Verlauf des Abgasstrangs, in welchem die einzelnen Komponenten angeordnet sind, beschrieben. Das Dokument WO 2012/123660 A1 wird ein L-förmig gewinkelter Abgasstrang dargestellt. Das Dokument EP 2 500 538 A1 betrifft einen dem Dosiermodul zugeordneten Vorsprung im Abgasstrang, welcher einen Teil des Abgasstroms zum Dosiermodul leitet.

Die Dokumente EP 2 105 592 A1 und DE 10 2009 027 185 A1 beschreiben Dosiereinheiten zur Einspritzung von Reduktionsmitteln in die Abgasanlage eines Kraftfahrzeuges. Beide beschriebenen Erfindungen umfassen dabei Kühlrippen, durch welche Luft als Kühlmedium strömt.

Der vorliegenden Erfindung liegt die Aufgabe zugrunde, eine Einrichtung sowie ein Verfahren zur Verfügung zu stellen, mit denen in effizienter und kostengünstiger Weise die Stickoxidverbindungen im Abgas reduziert werden können.

Diese Aufgabe wird durch die erfindungsgemäße Abgasbehandlungseinrichtung nach Anspruch 1 sowie das erfindungsgemäße Verfahren zur Aufbereitung von Abgas eines Verbrennungsaggregats nach Anspruch 10 gelöst. Ergänzend wird gemäß Anspruch 13 ein Kraftfahrzeug vorgeschlagen, welches eine erfindungsgemäße Abgasbehandlungseinrichtung umfasst.

Es wird erfindungsgemäß eine Abgasbehandlungseinrichtung zur Aufbereitung von Abgas eines Verbrennungsaggregats, insbesondere eines Dieselmotors, zur Verfügung gestellt, wobei die Abgasbehandlungseinrichtung einen Abgasstrang und darin angeordnet einen Oxidationskatalysator, einen Reduktionskatalysator zur selektiven katalytischen Reduktion und einen Partikelfilter aufweist, wobei der Oxidationskatalysator stromaufwärts des Reduktionskatalysators und der Reduktionskatalysator stromaufwärts des Partikelfilters angeordnet ist. Es ist erfindungsgemäß vorgesehen, dass der Reduktionskatalysator im Abgasstrang in Abgas-Strömungsrichtung derart weit stromaufwärts angeordnet ist, dass die Wärme des den Reduktionskatalysator passierenden Abgases ausreicht, um den Reduktionskatalysator auf Betriebstemperatur zu bringen. Eine erfindungsgemäße Abgasbehandlungseinrichtung weiterhin eine Niederdruck-Abgasrückführungseinrichtung aufweist. Die Niederdruck-Abgasrückführungseinrichtung umfasst eine Kühleinrichtung. Das Dosiermodul umfasst eine von einem Kühlmedium durchströmbare Kühlungseinheit. Die Kühleinrichtung ist derart wärmetechnisch mit dem Dosiermodul des Reduktionskatalysators verbunden, dass mittels der Kühleinrichtung der Niederdruck-Abgasrückführeinrichtung das Dosiermodul kühlbar ist. Die Kühlungseinheit ist derart ausgestaltet und ausgelegt, dass die Kühlungseinheit strömungstechnisch mit der Kühleinrichtung der Niederdruck-Abgasrückführung der Verbrennungsaggregats verbindbar ist. Dabei ist das Kühlmedium vond er Kühlungseinrichtung zur Kühlung des Dosiermoduls nutzbar.

Die Wärme des den Reduktionskatalysator passierenden Abgases ist dabei die Wärme des Abgases des Verbrennungsaggregats, gegebenenfalls abzüglich etwaiger Wärmeverluste durch den Transport des Abgases vom Verbrennungsaggregat zum Reduktionskatalysator. Die Abgaswärme ist somit die Wärme, die bei der exothermen Verbrennung des Kraftstoffes im Verbrennungsaggregat entsteht. Die Erfindung hat somit den Vorteil, dass die Temperatur des Abgases nach der exothermen Reaktion im Verbrennungsaggregat zur Zersetzung des Reduktionsmittels Ammoniak genutzt werden kann, sowie zur Reduktion von Stickstoffverbindungen zusammen mit Ammoniak zu unschädlichen Stoffen wie Wasser und Stickstoff. Der Reduktionskatalysator ist dabei bevorzugt ein so genannter SCR-Katalysator (selective catalytic reduction), der ein Reduktionsmittel, wie zum Beispiel Harnstoff, beziehungsweise einen Reduktionsmittel-Vorläufer, wie zum Beispiel eine Harnstoff-WasserLösung, in Ammoniak umsetzt, welches dann katalytisch mit Stickoxiden selektiv zu Stickstoff und Wasser konvertiert wird. Dadurch lässt sich der Ausstoß von Stickoxiden um bis zu 90 % verringern.

Diese erfindungsgemäße Abgasbehandlungseinrichtung mit einer Niederdruck-Abgasrückführungseinrichtung hat den Vorteil der einfachen und kostengünstigen Abgasführung vom Reduktionskatalysator zur Niederdruck-Abgasrückführungseinrichtung, im Gegensatz zu herkömmlichen Ausführungsformen mit dem Reduktionskatalysator am Unterboden eines Kraftfahrzeuges, bei denen erhöhter baulicher Aufwand zur Abgasführung vom Reduktionskatalysator zur Niederdruck-Abgasrückführungseinrichtung anfällt. Eine Niederdruck-Abgasrückführungseinrichtung hat gegenüber einer Hochdruck-Abgasrückführungseinrichtung den Vorteil, dass der gesamte Abgasmassenstrom über eine Turbine für die Leistungsentwicklung zur Verfügung steht. Bei einer Hochdruck-Abgasrückführungseinrichtung wird ein Abgasmassenstrom vor der Turbine entnommen und dem Aggregat wieder zugeführt. Dieser Massenstrom kann nicht mehr zum Aufbau des Ladedrucks genutzt werden.

Ein solcher Reduktionskatalysator ist erfindungsgemäß im Abgasstrang in Abgas-Strömungsrichtung derart weit stromaufwärts angeordnet, dass die Wärme des den Reduktionskatalysator passierenden Abgases ausreicht, um eine Zersetzung des Reduktionsmittels zu realisieren und/oder eine Reduktion von Stickstoffverbindungen zusammen mit Ammoniak zu den genannten unschädlichen Stoffen wie Wasser und Stickstoff durchzuführen. Durch die erfindungsgemäße Anordnung des Reduktionskatalysators stromabwärts des Oxidationskatalysators ergibt sich der Vorteil der zusätzlichen Ausnutzung der Wärme des Abgases nach der exothermen Reaktion im Oxidationskatalysator. Das heißt, dass der Oxidationskatalysator im Betriebszustand die Temperatur des Abgases ebenfalls erhöht, so dass der nachgeschaltete Reduktionskatalysator noch effizienter betreibbar ist.

Durch die optimale Reduktion im Reduktionskatalysator gelangen aufbereitete Abgase in den nachgeschalteten Partikelfilter.

Des Weiteren kann zusätzlich ein Abgasturbolader im Abgasstrang angeordnet sein, wobei in diesem Falle der Reduktionskatalysator stromaufwärts des Abgasturboladers angeordnet ist, da dort die Temperatur des Abgases höher ist als an einer Position stromabwärts des Abgasturboladers.

Es lässt sich eine Wirkungsgradverbesserung bis auf zirka 90 % des Reduktionskatalysators erreichen, da nicht mehr eine herkömmliche elektrische Aufheizung des Reduktionsmittels oder eine verschleppte Verbrennung notwendig ist, so dass insgesamt der CO₂-Ausstoß verringert werden kann und/oder weniger Kraftstoff einzusetzen ist.

In bevorzugten Ausführungsformen ist vorgesehen, dass der Reduktionskatalysator derart weit stromaufwärts angeordnet ist, dass das den Reduktionskatalysator passierende Abgas noch wenigstens 40 % und in besonders bevorzugter Ausführungsform wenigstens 80 % der Temperatur aufweist, die das Abgas direkt nach der Verbrennung im Verbrennungsaggregat hat. Die Erfindung betrifft somit eine Abgasbehandlungseinrichtung, die, wenn sie an ein Verbrennungsaggregat angeschlossen ist, von Abgas durchströmt ist, wobei das Abgas, welches am Reduktionskatalysator entlang strömt, noch wenigstens 40 % der Temperatur hat, die das Abgas direkt nach der Verbrennung im Verbrennungsaggregat aufweist. Vorzugsweise sollte die Position des Reduktionskatalysators so dicht am Verbrennungsaggregat sein, dass das den Reduktionskatalysator passierende Abgas eine Temperatur von mindestens 60 % und bevorzugt mindestens 80 % und in besonders günstiger Ausgestaltung mindestens 90 % der Temperatur des Abgases direkt nach der Verbrennung im Verbrennungsaggregat hat.

Der Abgasstrang, in dem der Reduktionskatalysator angeordnet ist, weist vorzugsweise eine Anschlusseinrichtung zum Anschließen des Abgasstranges am Verbrennungsaggregat auf, so dass der Reduktionskatalysator so dicht wie möglich am Verbrennungsaggregat angeordnet werden kann. Dabei kann der Abgasstrang einfache Leitungsstücke oder auch weitere Aggregate, wie zum Beispiel weitere Katalysatoren, aufweisen. Durch die erfindungsgemäße Ausgestaltung des Abgasstranges ergibt sich der Vorteil des konstruktiv einfacheren Verlaufs der Abgasanlage am Unterboden eines Kraftfahrzeuges, da am Unterboden beziehungsweise unter dem Unterboden kein Reduktionskatalysator mehr angeordnet werden muss.

Durch die erfindungsgemäße frühzeitige Ausnutzung der hohen Temperatur des Abgases ist es möglich, schon wesentlich früher als bisher praktiziert Reduktionsmittel in das Abgas einzubringen und somit früher als bei herkömmlichen Reduktionsverfahren die Stickstoffverbindungen umzuwandeln. Durch die erfindungsgemäße frühe Einbringung des Reduktionsmittels in das Abgas lässt sich optimal eine frühe Homogenisierung des Abgases, das heißt eine gleichmäßige Verteilung,des Reduktionsmittels im Abgas, erreichen, so dass die Reduktion effizient realisiert werden kann.

Außerdem kann thermische Energie des Verbrennungsaggregates genutzt werden, welche mittels Wärmestrahlung über die Umgebungsluft und/oder mittels Wärmeleitung im festen Material des an das Verbrennungsaggregat angeschlossenen Abgasstrangs zum Reduktionskatalysator gelangt, so dass die Temperatur des Abgases mindestens die bevorzugten 40 % und vorzugsweise über 80 % der Temperatur des Abgases unmittelbar nach dem Verbrennungsprozess beträgt. Durch die effiziente Betriebsweise des dicht am Verbrennungsaggregat angeordneten Reduktionskatalysators ist lediglich ein Reduktionskatalysator erforderlich, wodurch zusätzlich Volumen im Unterbodenbereich gewonnen beziehungsweise zur Verfügung gestellt wird und die Montage des Abgasstranges erleichtert wird.

In der erfindungsgemäßen Abgasbehandlungseinrichtung ist vorgesehen, dass der Reduktionskatalysator ein Dosiermodul zur dosierten Einbringung des Reduktionsmittels aufweist, wobei das Dosiermodul eine von einem Kühlmedium durchströmbare Kühlungseinheit aufweist und derart ausgestaltet und ausgelegt ist, dass die Kühlungseinheit strömungstechnisch mit einer Kühleinrichtung des Verbrennungsaggregats verbindbar ist, so dass Kühlmedium von der Kühlungseinrichtung zur Kühlung des Dosiermoduls nutzbar ist. Die Einbringung des Reduktionsmittels erfolgt bevorzugt durch Einspritzung. Das Dosiermodul wird durch die hohe Temperatur des Abgases erwärmt, wobei die bereits genannten Vorteile generiert werden. Das Dosiermodul kann zur Erleichterung und der Realisierung der Einspritzung des Reduktionsmittels gekühlt werden. Eine Kühlung ist insbesondere dann notwendig, wenn eine Erwärmung des Dosiermoduls über 80 °C zu erwarten ist, welche zu einer vorzeitigen Alterung des Harnstoffes führt. Aus fertigungstechnischen Gründen sowie hinsichtlich der Gewichtsoptimierung ist die Abgasbehandlungseinrichtung vorteilhaft ausgestaltet, wenn eine Kühleinrichtung des Verbrennungsaggregates das Dosiermodul ebenfalls mit Kühlmedium speisen kann. Bei Verwendung eines Dieselmotors als Verbrennungsaggregat kann die Kühlungseinheit des Dosiermoduls an die Kühlung des Motors angeschlossen sein, wodurch sich eine einfache und effiziente sowie gewichts- und volumensparende Kühlung des Dosiermoduls erreichen lässt.

Weiterhin kann insbesondere zum Zweck der Volumenverringerung vorgesehen sein; dass der Reduktionskatalysator an einem den Oxidationskatalysator mit dem Partikelfilter verbindenden Modul angeordnet ist. Dieses Modul kann ein so genannter Verbindungstrichter sein. Ein solches Modul ist kostengünstig herstellbar und erlaubt in einfacher Weise eine platzsparende Anordnung des Dosiermoduls des Reduktionskatalysators.

Diese Ausführungsform der Erfindung ist insbesondere dann vorteilhaft ausgestaltet, wenn das Modul ein vom Abgas durchströmbares Gehäuse aufweist, welches als Gehäuse des Reduktionskatalysators dient. In dieser Ausführungsform kann eine Einspritzung des Reduktionsmittels direkt in das Gehäuse beziehungsweise in das Modul erfolgen.

In alternativer Ausgestaltung kann vorgesehen sein, dass der Reduktionskatalysator direkt am Partikelfilter angeordnet ist. Das heißt, dass der Partikelfilter und der Reduktionskatalysator zusammen eine bauliche Einheit ausbilden, die insgesamt ein geringes Volumen aufweist, da das Gehäuse des Partikelfilters teilweise auch als Gehäuse des Reduktionskatalysators verwendet wird.

Es wird außerdem erfindungsgemäß ein Verfahren zur Aufbereitung von Abgas eines Verbrennungsaggregats durch selektive katalytische Reduktion zur Verfügung gestellt, insbesondere zur Aufbereitung von Abgas eines Dieselmotors. Dabei strömt das Abgas durch einen mit dem Verbrennungsaggregat gekoppelten Abgasstrang, wobei in dem Abgasstrang ein Oxidationskatalysator stromaufwärts eines zur selektiven katalytischen Reduktion vorgesehenen Reduktionskatalysators und der Reduktionskatalysator stromaufwärts eines Partikelfilters angeordnet ist und die Wärme des den Reduktionskatalysator passierenden Abgases genutzt wird, um den Reduktionskatalysator auf Betriebstemperatur zu erwärmen. Das Dosiermodul wird mit Kühlmedium einer Kühleinrichtung gekühlt. Die Kühlung geschieht mittels einer Niederdruck-Abgasrückführungseinrichtung, die die Kühleinrichtung umfasst, die derart wärmetechnisch mit dem Dosiermodul des Reduktionskatalysators verbunden ist, dass mittels der Kühleinrichtung der Niederdruck-Abgasrückführungseinrichtung das Dosiermodul kühlbar ist. Die Wärme des Abgases wird dabei zur Erwärmung des Reduktionskatalysators aus dem kalten Zustand sowie zur Aufrechterhaltung der Betriebstemperatur genutzt. Es kann dabei vorgesehen sein, dass ausschließlich Wärme des den Reduktionskatalysator passierenden Abgases genutzt wird, um den Reduktionskatalysator auf Betriebstemperatur zu bringen beziehungsweise zu halten. Als Reduktionsmittel kann dabei ein Reduktionsmittelvorläufer, wie zum Beispiel gasförmiges Ammoniak, oder auch eine Reduktionsmittelvorläuferlösung, wie zum Beispiel auch eine wässrige Lösung mit gelöstem Harnstoff, genutzt werden. Vorzugsweise sollte das den Reduktionskatalysator passierende Abgas eine Temperatur von mindestens 40 %, insbesondere 60 % und in besonderer Ausführungsform mindestens 80 % und bestmöglich mindestens 90 % der Temperatur des Abgases direkt nach der Verbrennung im Verbrennungsaggregat haben. Das heißt, dass das Abgas nach dem Austritt aus dem Verbrennungsaggregat nicht noch einmal elektrisch erwärmt wird, sondern die Temperatur des Abgases ausschließlich auf die exotherme Reaktion im Verbrennungsprozess im Verbrennungsaggregat und/oder im Oxidationskatalysator zurückzuführen ist. Eine geringere der Temperatur des Abgases im Reduktionskatalysator ist demzufolge lediglich auf eine Wärmeübertragung auf die Umgebung des Abgasstranges stromabwärts des Verbrennungsaggregates zurückzuführen.

Das Reduktionsmittel kann dabei direkt in den Partikelfilter oder in ein Modul eingebracht werden, welches den Oxidationskatalysator mit dem Partikelfilter strömungstechnisch verbindet. Das Reduktionsmittel kann an diesen Stellen durch Einspritzung in das Abgas eingebracht werden.

Erfindungsgemäß wird außerdem ein Kraftfahrzeug zur Verfügung gestellt, insbesondere ein dieselmotorisch betriebenes Kraftfahrzeug, welches eine erfindungsgemäße Abgasbehandlungseinrichtung aufweist. Dieses Kraftfahrzeug kann derart ausgestaltet sein, dass der Reduktionskatalysator ein Dosiermodul zur dosierten Einbringung des Reduktionsmittels aufweist, wobei das Dosiermodul eine von einem Kühlmodul durchströmbare Kühleinheit aufweist und strömungstechnisch mit einer Kühleinrichtung des Verbrennungsaggregats verbunden ist. Alternativ oder hinzukommend kann vorgesehen sein, dass die Kühlungseinheit des Dosiermoduls mit einem Kühler einer Abgasrückführungsanlage strömungstechnisch verbunden ist. In beiden Ausgestaltungsvarianten lässt sich eine bereits vorhandene Kühleinrichtung zur Kühlung des Dosiermoduls verwenden. In bevorzugter Ausführungsform des Kraftfahrzeuges ist dieses derart ausgestaltet, dass der Reduktionskatalysator oberhalb des Kraftfahrzeug-Unterbodens angeordnet ist. Bevorzugt weist das Kraftfahrzeug lediglich einen Reduktionskatalysator auf, nämlich den Reduktionskatalysator in der erfindungsgemäßen Abgasbehandlungseinrichtung, wobei der Reduktionskatalysator erfindungsgemäß sehr dicht am Motor und somit nicht mehr im Unterbodenbereich angeordnet ist.

Die Erfindung wird nachfolgend in Ausführungsbeispielen anhand der zugehörigen Zeichnungen erläutert. Es zeigen:
- Figur 1: ein Verbrennungsaggregat mit erfindungsgemäßer Abgasbehandlungseinrichtung in perspektivischer Ansicht;
- Figur 2: einen vergrößerten Ausschnitt aus der in Figur 1 dargestellten Abgasbehandlungseinrichtung;
- Figur 3: ein Dosiermodul eines Reduktionskatalysators;
- Figur 4: den Reduktionskatalysator in Ansicht von der Seite;
- Figur 5: den Oxidationskatalysator mit daran angeschlossenem Reduktionskatalysator in Ansicht von vorn;
- Figur 6: den Oxidationskatalysator mit angeschlossenem Reduktionskatalysator in Schnittansicht;
- Figur 7: eine erfindungsgemäße Abgasbehandlungseinrichtung mit integrierter Niederdruck-Abgasrückführungseinrichtung; und
- Figur 8: ein Kraftfahrzeug in Ansicht von der Seite.

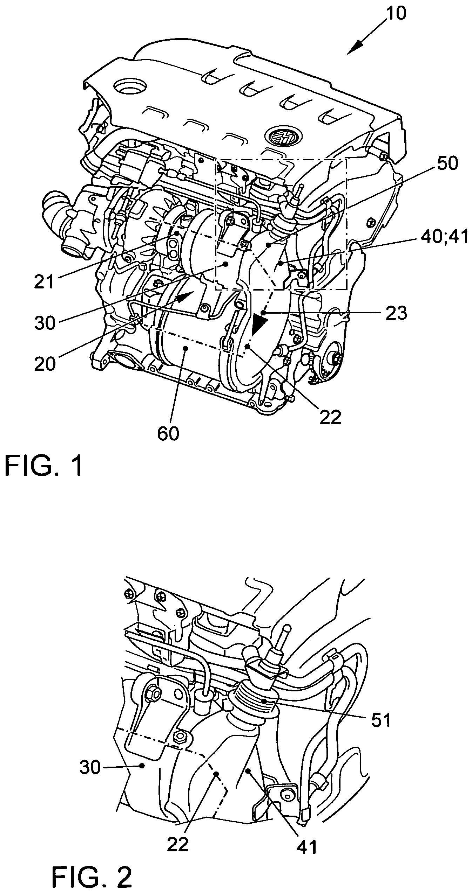

In Figur 1 ist deutlich ein Verbrennungsaggregat 10 ersichtlich, an dessen Abgasstrang 20 an einer Anschlusseinrichtung 21 ein Oxidationskatalysator 30 und an diesem stromabwärts in Abgas-Strömungsrichtung 23 im strich-punktierte angedeuteten Abgaspfad 22 ein Reduktionskatalysator 50 an einem verbindenden Modul 40 beziehungsweise an dessen Gehäuse 41 angeordnet ist. Das verbindende Modul 40 führt zu einem Partikelfilter 60, der ebenfalls im Abgaspfad 22 angeordnet ist.

Das heißt, dass der Reduktionskatalysator 50 am Gehäuse 41 des verbindenden Moduls 40 zwischen dem Oxidationskatalysator 30 und dem Partikelfilter 60 angeordnet ist.

Entgegen herkömmlichen Ausführungsformen ist somit der Reduktionskatalysator 50 sehr dicht am Verbrennungsaggregat 10 beziehungsweise an der Anschlusseinrichtung 21 angeordnet, so dass Wärme des Abgases, welches aus der exothermen Reaktion im Verbrennungsaggregat 10 entsteht, genutzt wird, um den Reduktionskatalysator 50 auf die erforderliche Betriebstemperatur zu bringen beziehungsweise ihn auf dieser Temperatur zu halten. Dabei kann zusätzlich auch die Wärme im Reduktionskatalysator 50 genutzt werden, die bei einer exothermen Reaktion im Oxidationskatalysator 30 freigesetzt wird, da der Reduktionskatalysator 50 unmittelbar an den Oxidationskatalysator 30 anschließt.

Wie Figur 2 entnehmbar ist, ist vorzugsweise das Dosiermodul 51 des Reduktionskatalysators 50 an dem verbindenden Modul 40 beziehungsweise an dessen Gehäuse angeschlossen.

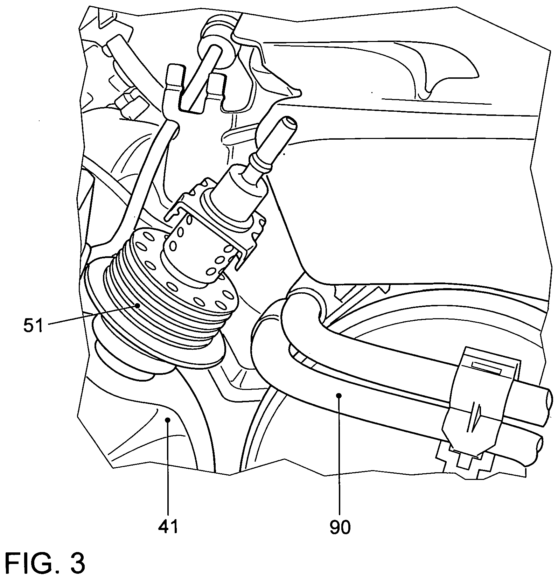

Wie in Figur 3 erkennbar ist, ergeben sich trotz üblicher beengter Bauraumverhältnisse im Motorbereich keine Kollisionen mit weiteren Bauteilen, wie zum Beispiel mit der Sammelleitung 90. Die Erfindung ist vorzugsweise an einem quer einzubauenden beziehungsweise eingebauten Dieselmotor anzuwenden.

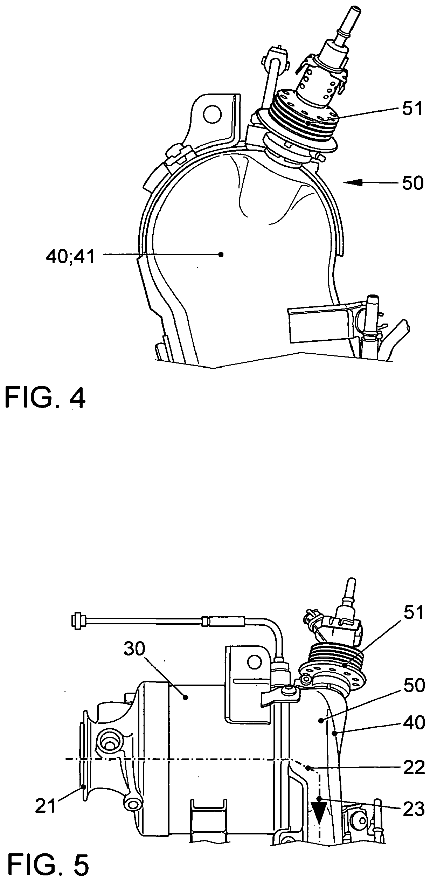

In den Figuren 4 und 5 ist die zweckmäßige Ausgestaltung des Gehäuses 41 des verbindenden Moduls 40 gezeigt, um die Reduktion in diesem Modul 40 durchführen zu können. Ersichtlich ist, dass zur Realisierung der Reduktion im Wesentlichen lediglich das Dosiermodul 51 am verbindenden Modul 40 anzuordnen ist.

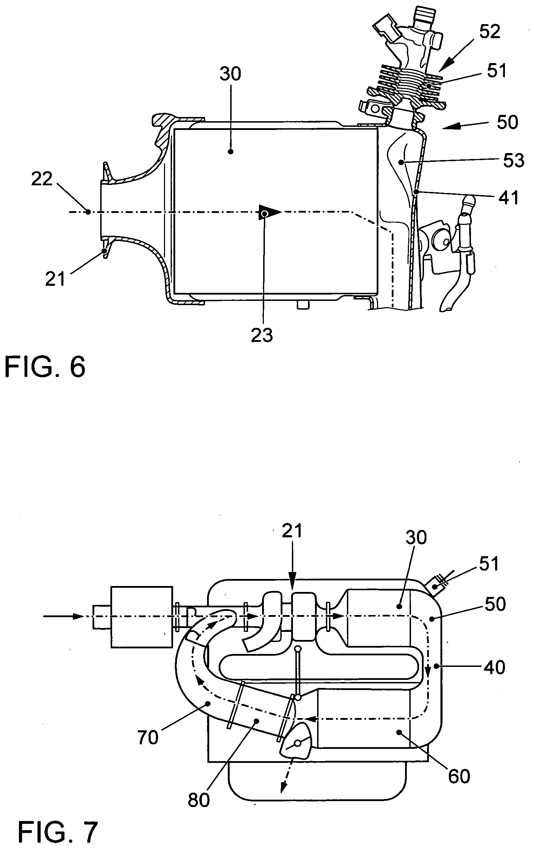

Aus Figur 6 ist ersichtlich, in welchem Bereich die eigentliche Reduktion realisiert wird. Das Abgas strömt im Abgaspfad 22 entlang der Abgas-Strömungsrichtung 23 durch den Oxidationskatalysator 30 und von diesem in das Gehäuse 41. Das an diesem Gehäuse 41 angesetzte Dosiermodul 51 des Reduktionskatalysators 50 ermöglicht die Einbringung des Reduktionsmittels in das heiße Abgas zur Realisierung der Reduktion. Dabei erfolgt die Einbringung des Reduktionsmittels durch das Dosiermodul 51 bevorzugt durch eine Einspritzung 53, wie sie im Hohlraum des Gehäuses 41 angedeutet ist. Eine Kühlungseinheit 52 am Dosiermodul 51 kann dabei mit einer Kühleinrichtung des Verbrennungsaggregates 10 strömungstechnisch verbunden sein und/oder mit einer Kühleinrichtung einer Niederdruck-Abgasrückführungseinrichtung 70 verbunden sein.

Die Anordnung einer solchen Niederdruck-Abgasrückführungseinrichtung 70 ist Figur 7 entnehmbar. Es ist ersichtlich, dass sich die Niederdruck-Abgasrückführungseinrichtung 70 im Abgaspfad 22 an den Partikelfilter 60 anschließt. Die Niederdruck-Abgasrückführungseinrichtung 70 weist dabei vorteilhafterweise eine Kühleinrichtung 80 auf, die, wie bereits beschrieben, mit der Kühlungseinheit 52 des Dosiermoduls 51 des Reduktionskatalysators 50 verbunden sein kann. Bei entsprechender Auslegung der Kühleinrichtung 80 des Verbrennungsaggregates 10 beziehungsweise der Niederdruck-Abgasrückführungseinrichtung 70 lässt sich das Dosiermodul 51 des Reduktionskatalysators 50 in einfacher und effizienter Weise kühlen, auch ohne Bauraum beanspruchende zusätzliche Kühlungsaggregate am Reduktionskatalysator 50 vorzusehen.

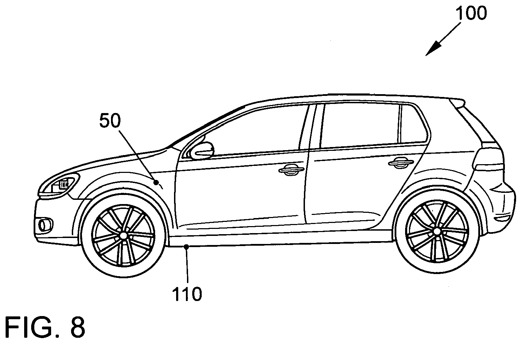

Aus Figur 8 ist ersichtlich, dass der Reduktionskatalysator 50 vorzugsweise im Motorraum des Kraftfahrzeuges 100 anzuordnen ist, und zwar so dicht wie möglich am Verbrennungsaggregat 10. Das heißt, dass der Reduktionskatalysator 50 über dem Kraftfahrzeug-Unterboden 110 angeordnet ist.

### Bezugszeichenliste

- 10: Verbrennungsaggregat
- 20: Abgasstrang
- 21: Anschlusseinrichtung
- 22: Abgaspfad
- 23: Abgas-Strömungsrichtung
- 30: Oxidationskatalysator
- 40: verbindendes Modul
- 41: Gehäuse
- 50: Reduktionskatalysator
- 51: Dosiermodul
- 52: Kühlungseinheit
- 53: Einspritzung
- 60: Partikelfilter
- 70: Niederdruck-Abgasrückführungseinrichtung
- 80: Kühleinrichtung
- 90: Sammelleitung
- 100: Kraftfahrzeug
- 110: Kraftfahrzeug-Unterboden

## Patentansprüche

1. Abgasbehandlungseinrichtung zur Aufbereitung von Abgas eines Verbrennungsaggregats, umfassend einen Abgasstrang (20) und darin angeordnet einen Oxidationskatalysator (30), einen Reduktionskatalysator (50) zur selektiven katalytischen Reduktion und einen Partikelfilter (60), wobei der Oxidationskatalysator (30) stromaufwärts des Reduktionskatalysators (50) und der Reduktionskatalysator (50) stromaufwärts des Partikelfilters (60) angeordnet ist, wobei der Reduktionskatalysator (50) im Abgasstrang (20) in Abgas-Strömungsrichtung (23) derart weit stromaufwärts angeordnet ist, dass die Wärme des den Reduktionskatalysator (50) passierenden Abgases ausreicht, um den Reduktionskatalysator (50) auf Betriebstemperatur zu bringen, und der Reduktionskatalysator (50) ein Dosiermodul (51) zur dosierten Einbringung des Reduktionsmittels aufweist,**dadurch gekennzeichnet, dass** die Abgasbehandlungseinrichtung weiterhin eine Niederdruck-Abgasrückführungseinrichtung (70) aufweist, wobei die Niederdruck-Abgasrückführungseinrichtung (70) eine Kühleinrichtung (80) umfasst und das Dosiermodul (51) eine von einem Kühlmedium durchströmbare Kühlungseinheit (52) aufweist, wobei die Kühleinrichtung (80) derart wärmetechnisch mit dem Dosiermodul (51) des Reduktionskatalysators (50) verbunden ist, dass mittels der Kühleinrichtung (80) der Niederdruck-Abgasrückführungseinrichtung (70) das Dosiermodul (51) kühlbar ist, und die Kühlungseinheit (52) derart ausgestaltet und ausgelegt ist, dass die Kühlungseinheit (52) strömungstechnisch mit der Kühleinrichtung (80) der Niederdruck-Abgasrückführungseinrichtung (70) des Verbrennungsaggregats (10) verbindbar ist, so dass das Kühlmedium von der Kühleinrichtung (80) zur Kühlung des Dosiermoduls (51) nutzbar ist.

2. Abgasbehandlungseinrichtung zur Aufbereitung von Abgas nach Anspruch 1, **dadurch gekennzeichnet, dass** der Reduktionskatalysator (50) derart weit stromaufwärts angeordnet ist, dass den Reduktionskatalysator (50) passierendes Abgas noch wenigstens 40 % der Temperatur aufweist, die das Abgas direkt nach der Verbrennung im Verbrennungsaggregat (10) hat.

3. Abgasbehandlungseinrichtung zur Aufbereitung von Abgas nach einem der Ansprüche 1 und 2, **dadurch gekennzeichnet, dass** der Reduktionskatalysator (50) derart weit stromaufwärts angeordnet ist, dass den Reduktionskatalysator (50) passierendes Abgas noch wenigstens 80 % der Temperatur aufweist, die das Abgas direkt nach der Verbrennung im Verbrennungsaggregat (10) hat.

4. Abgasbehandlungseinrichtung zur Aufbereitung von Abgas nach einem der vorhergehenden Ansprüche, **dadurch gekennzeichnet, dass** die Abgasbehandlungseinrichtung eine Abgasbehandlungseinrichtung eines Dieselmotors ist.

5. Abgasbehandlungseinrichtung zur Aufbereitung von Abgas nach einem der Ansprüche 1 bis 4, **dadurch gekennzeichnet, dass** der Reduktionskatalysator (50) an einem den Oxidationskatalysator (30) mit dem Partikelfilter (60) verbindenden Modul (40) angeordnet ist.

6. Abgasbehandlungseinrichtung zur Aufbereitung von Abgas nach Anspruch 5, **dadurch gekennzeichnet, dass** das Modul (40) ein von Abgas durchströmbares Gehäuse (41) aufweist, welches als Gehäuse (41) des Reduktionskatalysators (50) dient.

7. Abgasbehandlungseinrichtung zur Aufbereitung von Abgas nach einem der Ansprüche 1 bis 4, **dadurch gekennzeichnet, dass** der Reduktionskatalysator (50) am Partikelfilter (60) angeordnet ist.

8. Verfahren zur Aufbereitung von Abgas eines Verbrennungsaggregats durch selektive katalytische Reduktion mittels eines durch ein Dosiermodul (51) dosiert eingebrachtem Reduktionsmittels, welches durch einen mit dem Verbrennungsaggregat (10) gekoppelten Abgasstrang (20) strömt, wobei in dem Abgasstrang (20) ein Oxidationskatalysator (30) stromaufwärts eines zur selektiven katalytischen Reduktion vorgesehenen Reduktionskatalysators (50), der Reduktionskatalysator (50) stromaufwärts eines Partikelfilters (60) angeordnet ist, und Wärme des den Reduktionskatalysator (50) passierenden Abgases genutzt wird, um den Reduktionskatalysator (50) auf Betriebstemperatur zu erwärmen, **dadurch gekennzeichnet, dass** mittels einer Niederdruck-Abgasrückführungseinrichtung (70), welche eine Kühleinrichtung (80) umfasst, die derart wärmetechnisch mit dem Dosiermodul (51) des Reduktionskatalysators (50) verbunden ist, dass mittels der Kühleinrichtung (80) der Niederdruck-Abgasrückführungseinrichtung (70) das Dosiermodul (51) kühlbar ist, das Dosiermodul (51) mit Kühlmedium der Kühleinrichtung (80) gekühlt wird.

9. Verfahren zur Aufbereitung von Abgas nach Anspruch 8, **dadurch gekennzeichnet, dass** ausschließlich Wärme des den Reduktionskatalysator passierenden Abgases genutzt wird, um den Reduktionskatalysator auf Betriebstemperatur zu bringen.

10. Verfahren zur Aufbereitung von Abgas nach einem der Ansprüche 8 und 9, **dadurch gekennzeichnet, dass** das Reduktionsmittel direkt in den Partikelfilter oder in ein Modul eingespritzt wird, welches den Oxidationskatalysator mit dem Partikelfilter strömungstechnisch verbindet.

11. Kraftfahrzeug mit einer Abgasbehandlungseinrichtung nach einem der Ansprüche 1 bis 7.

12. Kraftfahrzeug nach Anspruch 11, **dadurch gekennzeichnet, dass** das Kraftfahrzeug dieselmotorisch betrieben ist.

13. Kraftfahrzeug nach einem der Ansprüche 11 und 12, **dadurch gekennzeichnet, dass** der Reduktionskatalysator (50) oberhalb des Kraftfahrzeug-Unterbodens (110) angeordnet ist.

## Claims

1. Exhaust gas treatment device for treating exhaust gas of a combustion assembly, comprising an exhaust gas section (20) and, arranged therein, an oxidizing catalytic converter (30), a reduction catalytic converter (50) for selective catalytic reduction, and a particulate filter (60), the oxidizing catalytic converter (30) being arranged upstream of the reduction catalytic converter (50), and the reduction catalytic converter (50) being arranged upstream of the particulate filter (60), the reduction catalytic converter (50) being arranged in the exhaust gas section (20) upstream in the exhaust gas flow direction (23) to such an extent that the heat of the exhaust gas which passes the reduction catalytic converter (50) is sufficient to bring the reduction catalytic converter (50) to operating temperature, and the reduction catalytic converter (50) having a metering module (51) for the metered introduction of the reducing agent, **characterized in that**, furthermore, the exhaust gas treatment device has a low-pressure exhaust gas recirculation device (70), the low-pressure exhaust gas recirculation device (70) comprising a cooling device (80), and the metering module (51) having a cooling unit (52), through which a cooling medium can flow, the cooling device (80) being connected in heat terms to the metering module (51) of the reduction catalytic converter (50) in such a way that the metering module (51) can be cooled by means of the cooling device (80) of the low-pressure exhaust gas recirculation device (70), and the cooling unit (52) being configured and designed in such a way that the cooling unit (52) can be connected in flow terms to the cooling device (80) of the low-pressure exhaust gas recirculation device (70) of the combustion assembly (10), with the result that the cooling medium can be used by the cooling device (80) to cool the metering module (51).

2. Exhaust gas treatment device for treating exhaust gas according to Claim 1, **characterized in that** the reduction catalytic converter (50) is arranged upstream to such an extent that exhaust gas which passes the reduction catalytic converter (50) still has at least 40% of the temperature which the exhaust gas has directly after the combustion in the combustion assembly (10).

3. Exhaust gas treatment device for treating exhaust gas according to either of Claims 1 and 2, **characterized in that** the reduction catalytic converter (50) is arranged upstream to such an extent that exhaust gas which passes the reduction catalytic converter (50) still has at least 80% of the temperature which the exhaust gas has directly after the combustion in the combustion assembly (10).

4. Exhaust gas treatment device for treating exhaust gas according to one of the preceding claims, **characterized in that** the exhaust gas treatment device is an exhaust gas treatment device for a diesel engine.

5. Exhaust gas treatment device for treating exhaust gas according to one of Claims 1 to 4, **characterized in that** the reduction catalytic converter (50) is arranged on a module (40) which connects the oxidizing catalytic converter (30) to the particulate filter (60).

6. Exhaust gas treatment device for treating exhaust gas according to Claim 5, **characterized in that** the module (40) has a housing (41), through which exhaust gas can flow and which serves as a housing (41) of the reduction catalytic converter (50).

7. Exhaust gas treatment device for treating exhaust gas according to one of Claims 1 to 4, **characterized in that** the reduction catalytic converter (50) is arranged on the particulate filter (60).

8. Method for treating exhaust gas of a combustion assembly by way of selective catalytic reduction by means of a reducing agent which is introduced in a metered manner by way of a metering module (51) and flows through an exhaust gas section (20) which is coupled to the combustion assembly (10), an oxidizing catalytic converter (30) being arranged in the exhaust gas section (20) upstream of a reduction catalytic converter (50) which is provided for selective catalytic reduction, the reduction catalytic converter (50) being arranged upstream of a particulate filter (60), and heat of the exhaust gas which passes the reduction catalytic converter (50) being used to heat the reduction catalytic converter (50) to operating temperature, **characterized in that** the metering module (51) is cooled with cooling medium of the cooling device (80) by means of a low-pressure exhaust gas recirculation device (70) which comprises a cooling device (80) which is connected in heat terms to the metering module (51) of the reduction catalytic converter (50) in such a way that the metering module (51) can be cooled by means of the cooling device (80) of the low-pressure exhaust gas recirculation device (70).

9. Method for treating exhaust gas according to Claim 8, **characterized in that** exclusively heat of the exhaust gas which passes the reduction catalytic converter is used to bring the reduction catalytic converter to operating temperature.

10. Method for treating exhaust gas according to either of Claims 8 and 9, **characterized in that** the reducing agent is injected directly into the particulate filter or into a module which connects the oxidizing catalytic converter to the particulate filter in flow terms.

11. Motor vehicle having an exhaust gas treatment device according to one of Claims 1 to 7.

12. Motor vehicle according to Claim 11, **characterized in that** the motor vehicle is operated by diesel engine.

13. Motor vehicle according to either of Claims 11 and 12, **characterized in that** the reduction catalytic converter (50) is arranged above the motor-vehicle undertray (110).

## Revendications

1. Dispositif de traitement des gaz d'échappement, pour la préparation de gaz d'échappement d'un ensemble de combustion, comprenant une ligne d'échappement (20) et, disposé dans celle-ci, un catalyseur d'oxydation (30), un catalyseur de réduction (50) pour la réduction catalytique sélective et un filtre à particules (60), le catalyseur d'oxydation (30) étant disposé en amont du catalyseur de réduction (50) et le catalyseur de réduction (50) étant disposé en amont du filtre à particules (60), le catalyseur de réduction (50) étant disposé dans la ligne d'échappement (20) dans la direction d'écoulement des gaz d'échappement (23) en amont à une distance telle que la chaleur des gaz d'échappement passant à travers le catalyseur de réduction (50) suffise à amener le catalyseur de réduction (50) à la température de fonctionnement et le catalyseur de réduction (50) présentant un module de dosage (51) pour l'introduction dosée de l'agent réducteur, **caractérisé en ce que** le dispositif de traitement des gaz d'échappement présente en outre un dispositif de recirculation des gaz d'échappement à basse pression (70), le dispositif de recirculation des gaz d'échappement à basse pression (70) comprenant un dispositif de refroidissement (80) et le module de dosage (51) présentant une unité de refroidissement (52) pouvant être parcourue par un fluide de refroidissement, le dispositif de refroidissement (80) étant connecté thermiquement au module de dosage (51) du catalyseur de réduction (50) de telle sorte que le module de dosage (51) puisse être refroidi au moyen du dispositif de refroidissement (80) du dispositif de recirculation des gaz d'échappement à basse pression (70), et l'unité de refroidissement (52) étant configurée et conçue de telle sorte que l'unité de refroidissement (52) puisse être connectée fluidiquement au dispositif de refroidissement (80) du dispositif de recirculation des gaz d'échappement à basse pression (70) de l'unité de combustion (10) de telle sorte que le fluide de refroidissement puisse être utilisé par le dispositif de refroidissement (80) pour refroidir le module de dosage (51).

2. Dispositif de traitement des gaz d'échappement pour la préparation de gaz d'échappement selon la revendication 1, **caractérisé en ce que** le catalyseur de réduction (50) est disposé en amont à une distance telle que le gaz d'échappement passant à travers le catalyseur de réduction (50) présente encore au moins 40 % de la température des gaz d'échappement directement après la combustion dans l'unité de combustion (10).

3. Dispositif de traitement des gaz d'échappement pour la préparation de gaz d'échappement selon l'une quelconque des revendications 1 et 2, **caractérisé en ce que** le catalyseur de réduction (50) est disposé en amont à une distance telle que le gaz d'échappement passant à travers le catalyseur de réduction (50) présente encore au moins 80 % de la température des gaz d'échappement directement après la combustion dans l'unité de combustion (10).

4. Dispositif de traitement des gaz d'échappement pour la préparation de gaz d'échappement selon l'une quelconque des revendications précédentes, **caractérisé en ce que** le dispositif de traitement des gaz d'échappement est un dispositif de traitement des gaz d'échappement d'un moteur diesel.

5. Dispositif de traitement des gaz d'échappement pour la préparation de gaz d'échappement selon l'une quelconque des revendications 1 à 4, **caractérisé en ce que** le catalyseur de réduction (50) est disposé au niveau d'un module (40) reliant le catalyseur d'oxydation (30) au filtre à particules (60).

6. Dispositif de traitement des gaz d'échappement pour la préparation de gaz d'échappement selon la revendication 5, **caractérisé en ce que** le module (40) présente un boîtier (41) pouvant être parcouru par les gaz d'échappement, lequel sert de boîtier (41) pour le catalyseur de réduction (50).

7. Dispositif de traitement des gaz d'échappement pour la préparation de gaz d'échappement selon l'une quelconque des revendications 1 à 4, **caractérisé en ce que** le catalyseur de réduction (50) est disposé au niveau du filtre à particules (60).

8. Procédé de préparation de gaz d'échappement d'une unité de combustion par réduction catalytique sélective au moyen d'un agent réducteur pouvant être introduit de manière dosée par un module de dosage (51), lequel agent réducteur s'écoule à travers une ligne de gaz d'échappement (20) accouplée à l'unité de combustion (10), un catalyseur d'oxydation (30) étant disposé dans la ligne d'échappement (20) en amont d'un catalyseur de réduction (50) prévu pour la réduction catalytique sélective, le catalyseur de réduction (50) étant disposé en amont d'un filtre à particules (60), et la chaleur des gaz d'échappement passant à travers le catalyseur de réduction (50) étant utilisée pour chauffer le catalyseur de réduction (50) à la température de fonctionnement, **caractérisé en ce que** le module de dosage (51) peut être refroidi avec du fluide de refroidissement du dispositif de refroidissement (80) au moyen d'un dispositif de recirculation des gaz d'échappement à basse pression (70) qui comprend un dispositif de refroidissement (80), qui est connecté thermiquement au module de dosage (51) du catalyseur de réduction (50) de telle sorte que le module de dosage (51) puisse être refroidi au moyen du dispositif de refroidissement (80) du dispositif de recirculation des gaz d'échappement à basse pression (70).

9. Procédé de préparation de gaz d'échappement selon la revendication 8, **caractérisé en ce qu**'exclusivement la chaleur des gaz d'échappement passant à travers le catalyseur de réduction est utilisée pour amener le catalyseur de réduction à la température de fonctionnement.

10. Procédé de préparation de gaz d'échappement selon l'une quelconque des revendications 8 à 9, **caractérisé en ce que** l'agent réducteur est injecté directement dans le filtre à particules ou dans un module qui relie fluidiquement le catalyseur d'oxydation au filtre à particules.

11. Véhicule automobile comprenant un dispositif de traitement des gaz d'échappement selon l'une quelconque des revendications 1 à 7.

12. Véhicule automobile selon la revendication 11, **caractérisé en ce que** le véhicule automobile fonctionne avec un moteur diesel.

13. Véhicule automobile selon l'une quelconque des revendications 11 et 12, **caractérisé en ce que** le catalyseur de réduction (50) est disposé au-dessus du dessous de carrosserie du véhicule automobile (110).
